# EUROPÄISCHE PATENTSCHRIFT

(11) **EP 2 562 220 B1**
(45) Veröffentlichungstag und Bekanntmachung des Hinweises auf die Patenterteilung: **20.12.2017**
(21) Anmeldenummer: 12181318.2
(22) Anmeldetag: 22.08.2012
(51) Int. Cl.: C08K 3/00, C08K 5/29, C08L 23/08, C08L 77/06, C08L 77/00

(54) **Thermoplastische Formmassen mit erhöhter Hydrolyse-Beständigkeit**
Thermoplastic moulded substances with increased hydrolysis resistance
Masses de formage thermoplastiques dotées d'une résistance à l'hydrolyse améliorée

(30) Priorität: 25.08.2011 EP 11178821
(43) Veröffentlichungstag der Anmeldung: 27.02.2013
(73) Patentinhaber: LANXESS Deutschland GmbH, 50569 Köln (DE)
(72) Erfinder: Margraf, Günter, 41539 Dormagen (DE); Joachimi, Detlev, 47800 Krefeld (DE)

(56) Entgegenhaltungen:
- WO-A1-2006/124659
- WO-A1-2007/090739
- WO-A2-2008/030600
- DE-A1- 2 419 968
- DATABASE WPI Week 199218 Thomson Scientific, London, GB; AN 1992-145257 XP002667867, -& JP 4 081464 A (ASAHI CHEM IND CO LTD) 16. März 1992 (1992-03-16)

## Beschreibung

Diese Erfindung betrifft thermoplastische Formmassen, enthaltend A) Polyamid und/oder Copolyamid, B) wenigstens ein Copolymerisat aus mindestens einem Olefin und mindestens einem Acrylsäureester eines aliphatischen Alkohols, C) wenigstens einen Füll- und/oder Verstärkungsstoff, D) wenigstens ein oligomeres und/oder polymeres Carbodiimid, und gegebenenfalls noch wenigstens ein sonstiges Additiv E) und gegebenenfalls wenigstens einen Schlagzähmodifikator F). Die Erfindung betrifft darüber hinaus Formkörper oder Halbzeuge, die aus den erfindungsgemäßen Formmassen, bevorzugt mittels Spritzgießen, hergestellt werden. Die vorliegende Erfindung betrifft aber auch die Verwendung einer Stoffkombination aus wenigstens einer Komponente B) und wenigstens einer Komponente D) zur Verbesserung der Hydrolysebeständigkeit Polyamid-basierter Erzeugnisse.

Glasfaserverstärkte PA 66- (Polyamid 66-) Compounds haben sich im Automobilbau unter anderem für die Herstellung von Bauteilen für Kraftfahrzeug-Kühlkreisläufe etabliert. Bauteile für Kraftfahrzeug-Kühlkreisläufe im Sinne der vorliegenden Erfindung sind unter anderem Kühlwasserverteiler, Kühlerwasserkästen, Kühlwasserausgleichsbehälter, Thermostatgehäuse, Kühlwasserrohre, Wärmetauschergehäuse und Kühlsystem-Verbindungsstutzen.

Im Kraftfahrzeugbereich verwendet man im Kühlkreislauf eine Mischung aus Ethylenglykol und Wasser, bevorzugt im Verhältnis 1:1, als Kühlmittel. Dazu kommen üblicherweise noch geringe Mengen an Stabilisatoren, vor allem in sogenannten "Longlife coolants". Die Mischung aus Ethylenglykol und Wasser beginnt unter Normaldruck bei 108 °C zu sieden; wobei zuerst das Wasser abdestilliert und als Folge dessen der Ethylenglykol-Anteil allmählich zunimmt. Ab 160 °C löst sich PA 66 in Ethylenglykol auf. Aber auch gewöhnliche 1:1-Mischungen aus Ethylenglykol und Wasser greifen schon bei Temperaturen oberhalb 100 °C glasfaserverstärkte Polyamide an. Das Wasser/Ethylenglykol-Gemisch weicht den Kunststoff auf und baut zudem die Polymermatrix aktiv ab. Ursache hierfür sind chemische Reaktionen unter Beteiligung des Ethylenglykols und des Wassers, die sowohl das Polyamid selbst, als auch die Anbindung zwischen den Glasfasern und der Polymermatrix beeinträchtigen. Bei niedrigen Temperaturen ist diese sogenannte Hydrolyse/Glykolyse vergleichsweise langsam, höhere Temperaturen beschleunigen sie.

Die Bestimmung der Beständigkeit gegenüber Gemischen aus Wasser und Ethylenglykol von Polyamidformmassen - die sogenannte Hydrolyse-/ bzw. Glykolysebeständigkeit - erfolgt häufig an Hand von Normprüfstäben, die im Wasser/Ethylenglykol-Gemisch bei 120-135 °C in druckfesten Stahlbehältern für 7, 21 und 42 Tagen eingelagert werden. Im Anschluss an die Lagerung werden mechanische Ausprüfungen an den Normprüfstäben, bevorzugt Zugversuche, Biegeversuche oder die Eigenschaften mit denen spritzfrischer, nicht im Wasser/Ethylenglykol-Gemisch gelagerter Normprüfstäbe verglichen. Weiterhin werden die Probekörper auf Rissbildung hin untersucht. Je geringer der Abfall der betrachteten Eigenschaft vom spritzfrischen Zustand zum gelagerten Zustand nach 21 bzw. 42 Tagen ist, desto höher ist die Hydrolyse-/ bzw. Glykolysebeständigkeit der betrachteten Polyamidformmasse.

Zur Bestimmung der Hydrolyse-/ bzw. Glykolysebeständigkeit an Bauteilen für Kraftfahrzeug-Kühlkreisläufe werden die zu untersuchenden Bauteile in reinem Ethylenglykol bei 120-135 °C bzw. in Wasser/Ethylenglykol-Gemisch bei 120-135 °C eingelagert bzw. durchströmt. Nach Abschluss der Lagerung werden Berstdrücke der Bauteile bestimmt und optische Untersuchungen hinsichtlich Rissbildung durchgeführt. Je geringer der Abfall des Berstdruckes vom spritzfrischen Zustand zum gelagerten Zustand ist, desto höher ist die Hydrolyse-/ bzw. Glykolysebeständigkeit des betrachteten Bauteiles.

Aufgrund der Leistungssteigerung der Fahrzeugtriebwerke, die zu höheren Motortemperaturen und damit auch zu höheren Temperaturen im Kühlsystem führen, erhöht sich die Belastung Kühlwasser-führender Bauteile und führt zu höheren Anforderungen hinsichtlich der Herstellung zu diesem Zweck einzusetzender Polyamidformmassen. Diese deutlich gestiegenen Anforderungen können teilweise mit teilkristallinen, aliphatischen Polyamiden nicht erfüllt werden.

In diesem Fall können teilkristalline, teilaromatische Polyphthalamide verwendet werden, die die Eigenschaftslücke zwischen technischen Thermoplasten und Hochteistungskunststoffen füllen. Sie zeichnen sich durch eine geringere und langsamere Feuchteaufnahme, bessere chemische Beständigkeit und höhere Dauergebrauchstemperaturen im Vergleich zu teilkristallinen, aliphatischen Polyamiden wie Polyamid 6 und Polyamid 66 aus (Hellerich, Harsch, Haenle, "Werkstoff-Führer Dunststoffe", Carl Hanser Verlag, München, Wien, 2004, 9. Auflage, Seiten 159 bis 161).

Nachteilig wirken sich bei der Verwendung teilkristalliner, teilaromatischer Polyphthalamide der höhere Preis, die höhere Dichte und die deutlich höhere Schmelzeviskosität im Vergleich zu Polyamid 6 und Polyamid 66 aus. Darüber hinaus führt der signifikant erhöhte Schmelzpunkt zu einer weniger wirtschaftlichen Spritzgußverarbeitung (Kunststoff-Handbuch 3/4, Polyamide, Carl Hanser Verlag, München 1998, Seite 803-809).

JP 4 081 464 A beschreibt eine Zusammensetzung auf Polyphenylensulfidharz, Elastomer eines ethylenischen Copolymers aus 50 - 90 Ges.-% Ethyleneinheiten, 5 - 49 Ges.-% eines α,β-ungesättigten Carbonsäurealkylesters mit 0,5 - 10 Gew.-% Maleinsäureanhydrid, Palyatrtidharz, Polycarbodiimid und organischem oder anorganischem Füllstoff.

WO 2008/030600 A2 und WO 2006/124659 A1 offenbaren Polyamidzusammensetzungen enthaltend ein Polycarbodiimid und einen Maleinsäureanhydrid gepfropften EPDM Kautschuk oder ein Phenol-Formaldehydharz.

WO 2007/090739 A1 betrifft ein Verfahren zum Behandeln von Substraten indem man mindestens eine wässrige Formulierung enthaltend (A) mindestens ein Bindemittel, das erhältlich ist durch Copolymerisation von Ethylen, und (Meth)acrylsäure und gegebenenfalls einem oder mehreren weiteren Copolymeren, (B) mindestens ein Umsetzungsprodukt von mindestens einem Carbodiimid (C) mit mindestens einem Diol, Triol oder Polyol (D), oder (C) mindestens ein Carbodiimid und gegebenenfalls mindestens ein Diol, Triol oder Polyol, einsetzt.

DE 24 19 968 A1 beschreibt schließlich zähe, wärmealterungsbeständige und verarbeitungsstabile Polybutylenterephthalat-Formmassen u. a. enthaltend Polycarbodiimid.

DE 202010002421U1 beschreibt spritzgegossene oder extrudierte Bauteile im Kraftfahrzeug-Kühlkreislauf mit verbesserter Hydrolyse- und/oder Glykolysestabilität auf Basis eines Stoffgemisches, enthaltend Polyamid und/oder Copolyamid, Glasfasern mit kreisförmiger Querschnittsfläche und einem Filament-Durchmesser von 6 - 11 µm oder Glasfasern mit flacher Gestalt und nicht-kreisförmiger Querschnittsfläche, deren Hauptquerschnittsachse eine Breite im Bereich von 6-40 µm und deren Nebenquerschnittsachse eine Breite im Bereich von 3-20 µm aufweist, und oligomeres oder polymeres Carbodiimid.

EP 0 567 884 A1 beschreibt gegen Hydrolyse bei hohen Temperaturen, besonders im sauren Milieu, stabilisierte, nicht glasfaserverstärkte Polyamide, welche 0,1-5 % eines polymeren aromatischen Carbodiimides bezogen auf das Polyamid enthalten.

Copolymerisate von Olefinen mit Methacrylsäureestern oder Acrylsäureester können im Spritzgießprozeß als Fließverbesserer in Polyamidformmassen wirken. So wird in WO2005/121249A1 beschrieben, dass Mischungen aus mindestens einem teilkristallinen thermoplastischen Polyamid mit Copolymerisaten von Olefinen mit Methacrylsäureestern oder Acrylsäureestem aliphatische Alkohole, die einen MFI von 100 g/10 min nicht unterschreiten, im Spritzgießprozess zur Erniedrigung der Schtnelzvisltasität der daraus hergestellten erfindungsgemäßen Formmassen führen (MFI = Melt Flow Index). Der MFI dient zur Charakterisierung des Flusses einer Schmelze eines Thermoplasten und unterliegt den Normen ISO 1133 oder ASTM D 1238. Der MFI (Melt Flow Index) bzw, alle Angaben zum MFI im Rahmen der vorliegenden Erfindung beziehen sich bzw. wurden einheitlich nach ISO 1133 bei 190°C und einem Prüfgewicht von 2,16 kg gemessen bzw. bestimmt.

Die Aufgabe der vorliegenden Erfindung bestand in der Bereitstellung von Stoffgemischen bzw. thermoplastischen Formmassen auf Basis von Polyamid, die eine verringerte Feuchte- und Medienaufnahme, eine geringere Dichte, eine hohe Beständigkeit gegenüber Chemikalien, insbesondere gegenüber Gemischen aus Wasser und Ethylenglykol, bei erhöhter Temperatur, insbesondere bei Temperaturen von 130 °C und höher, aufweisen und darüber hinaus eine wirtschaftliche Verarbeitung ermöglichen.

Lösung der Aufgabe und somit Gegenstand der vorliegenden Erfindung sind thermoplastische Formmassen, enthaltend
A) 25 bis 79,85 Gewichtsteile eines oder mehrerer Polyamide oder Copolyamide,
B) 0,05 bis 10 Gewichststeile, bevorzugt 1 bis 6 Gewichtsteile, besonders bevorzugt 1,5 bis 5 Gewichtsteile wenigstens eines Copolymerisats aus mindestens einem Olefin und mindestens einem Acrylsäureester eines aliphatischen Alkohols, wobei der MFI des Copolymerisats größer 10 g/10 min ist und dieser nach ISO 1133 bei 190°C und einem Prüfgewicht von 2,16 kg gemessen bzw. bestimmt wird, mit mehr als 60 Gew.-Teilen Acrylsäure-(2-ethyl)-hexylester bezogen auf die Gesamtmenge an Acrylsäureester im Copolymerisat B),
C) 10 bis 65 Gewichtsteile, bevorzugt 15 bis 50 Gewichtsteile, besonders bevorzugt 20 bis 35 Gewichtsteile wenigstens eines Füll- und Verstärkungsstoffes, und
D) 0,05 bis 10 Gewichtsteile, bevorzugt 0,5 bis 5 Gewichtsteile, besonders bevorzugt 1 bis 3 Gewichtsteile wenigstens eines oligomeren oder polymeren Carbodiimids, wobei die Summe der Gewichtsteile 100 ergibt, und Füllstoffe und/oder Verstärkungsstoffe der Reihe Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffe auf der Basis von Kohlenstofffasern und/oder Glasfasern eingesetzt werden.

Überraschenderweise zeigen Bauteile, die man aus dem erfindungsgemäßen Stoffgemisch herstellt, eine gegenüber dem Stand der Technik deutlich verbesserte Hydrolysestabilität sowie Glykolysestabilität, bevorzugt wenn es sich um Bauteile im Kühlkreislauf eines Kraftfahrzeugs handelt und insbesondere wenn die Bauteile einem Wassermedium und/oder Glykolmedium bei Temperaturen von mehr als 120 °C ausgesetzt sind.

In einer bevorzugten Ausführungsform können die erfindungsgemäßen thermoplastischen Formmassen zusätzlich zu den Komponenten A) bis D) noch gegebenenfalls 0,05 bis 5 Gewichtsteile wenigstens eines sonstigen Additivs E) enthalten, wobei die Summe aller Gewichtsteile stets 100 ergibt, indem die Gewichtsteile der Komponenten A) bis D) entsprechend reduziert werden.

In einer bevorzugten Ausführungsform können die erfindungsgemäßen thermoplastischen Formmassen zusätzlich zu den Komponenten A) bis E) oder anstelle von E) noch F) 0,05 bis 5 Gewichtsteile wenigstens eines Schlagzähmodifikators enthalten, wobei die Summe aller Gewichtsteile stets 100 ergibt, indem die Gewichtsteile der Komponenten A) bis E) oder A) bis D) entsprechend reduziert werden.

Die Erfindung betrifft aber auch die Verwendung dieser erfindungsgemäßen thermoplastischen Formmassen enthaltend
A) 25 bis 79,85 Gewichtsteile eines oder mehrerer Polyamide oder Copolyamide,
B) 0,05 bis 10 Gewichtsteile, bevorzugt 1 bis 6 Gewichtsteile, besonders bevorzugt 1,5 bis 5 Gewichtsteile wenigstens eines Copolymerisats aus mindestens einem Olefin und mindestens einem Acrylsäureester eines aliphatischen Alkohols, wobei der MFI des Copolymerisats größer 10 g/10 min ist und dieser nach ISO 1133 bei 190°C und einem Prüfgewicht von 2,16 kg gemessen bzw. bestimmt wird, mit mehr als 60 Gew.-Teilen Acrylsäure-(2-ethyl)-hexylester bezogen auf die Gesamtmenge an Acrylsäureester im Copolymerisat B),
C) 10 bis 65 Gewichtsteile, bevorzugt 15 bis 50 Gewichtsteile, besonders bevorzugt 20 bis 35 Gewichtsteile wenigstens eines Füll- und Verstärkungsstoffes, und
D) 0,05 bis 10 Gewichtsteile, bevorzugt 0,5 bis 5 Gewichtsteile, besonders bevorzugt 1 bis 3 Gewichtsteile wenigstens eines oligomeren oder polymeren Carbodiimids,
wobei die Summe der Gewichststeile 100 ergibt und Füllstoffe und/oder Verstärkungsstoffe der Reihe Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffe auf der Basis von Kohlenstofffasern und/oder Glasfasern eingesetzt werden, zur Verstellung Polyamid-basierter Bauteile, bevorzugt von Polyamid-basierten Bauteilen für Kühlkreisläufe, besonders bevorzugt von Polyamid-basierten Bauteilen im Kraftfahrzeug-Kuhlkreistauf, insbesondere bevorzugt von Külrlerwasserverteilern, Kühlerwasserkästen, Kühlerausgleichsbehältern, Thermostatgehäusen, Kühlwasserrohren, Wärmetauschergehäusen oder Kühlsystem-Verbindungsstutzen.

Die vorliegende Erfindung betrifft ferner ein Verfahren zur Verhinderung der Hydrolyse und/oder Glykolyse von Bauteilen im Kraftfahrzeug-Kühlkreislauf, dadurch gekennzeichnet, dass die zur Verstellung dieser Komponenten einzusetzenden Polyamide in Form einer erfindungsgemäßen thermoplastischen Formmasse eingesetzt werden.

Die vorliegende Erfindung betrifft zudem die Verwendung einer Stoffkombination aus wenigstens einem Copolymerisat aus mindestens einem Olefin und mindestens einem Acrylsäureester eines aliphatischen Alkohols und wenigstens einem oligomeren oder polymeren Carbodiimid worin das Copolymerisat einen MFI größer 10 g / 10 min ist, bevorzugt größer 150 g / 10 min und besonders bevorzugt größer 300 g / 10 min aufweist, wobei der MFI nach ISO 1133 bei 190°C und einem Prüfgewicht von 2,16 kg gemessen bzw. bestimmt wird und als oligomeres oder polymeres Carbodiimid aliphatische, alicyclische oder aromatische Carbodiimide eingesetzt werden, die durch die Formel (II) 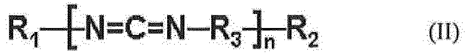 dargestellt werden, worin
R₁ und R₂ jeweils unabhängig voneinander für eine funktionelle chemische Gruppe stehen
R₃ eine aliphatische, alicyclische oder aromatische Gruppe symbolisiert und
n eine ganze Zahl von 3 bis 5000 bedeutet,
in Polyamid-basierten thermoplastischen Formmassen, bevorzugt zur Verbesserung der Hydrolysebeständigkeit Polyamid-basierter Erzeugnisse, besonders bevorzugt von Polyamid-basierten Bauteilen in Kühlkreisläufen, insbesondere bevorzugt in Polyamid-basierten Bauteilen im Kraftfahrzeug-Kühlkreislauf.

Zur Herstellung der in den erfindungsgemäßen thermoplastischen Formmassen als Komponente A) einzusetzenden Polyamide, sind eine Vielzahl von Verfahrensweisen bekannt, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung der als Komponente A) einzusetzenden Polyamide verlaufen bevorzugt über die Polykondensation in der Schmelze. Erfindungsgemäß wird hierunter auch die hydrolytische Polymerisation von Lactamen als Polykondensation verstanden.

Erfindungsgemäss bevorzugte Polyamide sind teilkristalline oder amorphe Polyamide, die ausgehend von Diaminen und Dicarbonsäuren und/oder Lactamen mit wenigstens 5 Ringgliedern oder entsprechenden Aminosäuren hergestellt werden können. Als Edukte kommen bevorzugt aliphatische und/oder aromatische Dicarbonsäure, besonders bevorzugt Adipinsäure, 2,2,4-Trimethyladipinsäure, 2,4,4-Trimethyladipinsäure, Azelainsäure, Sebazinsäure, Isophthalsäure, Terephthalsäure, aliphatische und/oder aromatische Diamine, besonders bevorzugt Tetramethylendiamin, Pentamethylendiamin, Hexamethylendiamin, 1,9-Nonandiamin, 2,2,4- und 2,4,4-Trimethylhexamethylendiamin, die Isomeren Diaminodicyclohexylmethane, Diaminodicyciohexylpropane, Bis-aminomethyl-cyclohexan, Phenylendiamine, Xylylendiamine, Aminocarbonsäuren, insbesondere Aminocapronsäure, oder die entsprechenden Lactame in Betracht. Copolyamide aus mehreren der genannten Monomeren sind eingeschossen.

Besonders bevorzugt ist Polyamid 6 oder Polyamid 66, ganz besonders bevorzugt wird Polyamid 66 als Komponente A) in den erfindungsgemäßen Stoffgemischen eingesetzt

Es können außerdem Anteile von rezyklierten Polyamid-Formmassen und oder Faserrezyklaten enthalten sein.

Die als Komponente A) einzusetzenden Polyamide weisen vorzugsweise eine relative Viskosität von 2,3 bis 4,0 besonders bevorzugt von 2,7 bis 3,5 auf, wobei die relative Viskosität an einer 1 gew.%igen Lösung in m-Kresol bei 25°C bestimmt bzw. gemessen werden kann.

Die erfindungsgemäßen thermoplastischen Formmassen enthalten wenigstens ein Copolymerisat B) aus mindestens einem Olefin, bevorzugt einem α-Olefin und mindestens einem Acrylsäureester eines aliphatischen Alkohols, wobei der MFI des Copolymerisats B) größer 10 g / 10 min ist, bevorzugt größer 150 g / 10 min und besonders bevorzugt größer 300 g / 10 min ist und dieser nach ISO 1133 bei 190° C und einem Prüfgewicht von 2,16 kg gemessen bzw. bestimmt wird mit mehr als 60 Gew.-Teilen Acrylsäure-(2-ethyl)-hexylester bezogen auf die Gesamtmenge an Acrylsäureester im Copolymerisat B). In einer bevorzugten Ausführungsform besteht das Copolymerisat B) zu weniger als 4 Gew.-Teilen, besonders bevorzugt zu weniger als 1,5 Gew.-Teilen und ganz besonders bevorzugt zu 0 Gew.-zu weniger als 1,5 Gew.-Teilen und ganz besonders bevorzugt zu 0 Gew.-Teilen aus Monomerbausteinen, die weitere reaktive funktionelle Gruppen ausgewählt aus der Gruppe umfassend Epoxide, Oxetane, Anhydride, Imide, Aziridine, Furane, Säuren, Amine, Oxazoline enthalten.

Bevorzugte Olefine als Bestandteil der Copolymerisate B) sind α-Olefine und weisen besonders bevorzugt zwischen 2 und 10 Kohlenstoff-Atomen auf und können unsubstituiert oder mit einer oder mehreren aliphatischen, cycloaliphatischen oder aromatischen Gruppen substituiert sein.

Ganz besonders bevorzugte Olefine sind ausgewählt aus der Gruppe umfassend Ethen, Propen, 1-Buten, 1-Penten, 1-Hexen, 1-Octen, 3-Methyl-1-penten. Insbesondere bevorzugte Olefine sind Ethen und Propen, insbesondere ganz besonders bevorzugt ist Ethen.

Ebenfalls geeignet sind Mischungen der beschriebenen Olefine.

In einer weiter bevorzugten Ausführungsform werden die weiteren reaktiven funktionellen Gruppen des Copolymerisats B), ausgewählt aus der Gruppe umfassend Epoxide, Oxetane, Anhydride, Imide, Aziridine, Furane, Säuren, Amine, Oxazoline, ausschließlich über die Olefine in das Copolymer B) eingebracht.

Der Gehalt des Olefins am Copolymerisat B) liegt zwischen 50 und 90 Gew.-Teilen, bevorzugt zwischen 55 und 75 Gew.-Teilen.

Das Copolymerisat B) wird weiterhin definiert durch den zweiten Bestandteil neben dem Olefin. Als zweiter Bestandteil werden Alkylester oder Arylalkylester der Acrylsäure eingesetzt, deren Alkyl- oder Arylalkylgruppe aus 1-30 Kohlenstoffatomen gebildet wird. Die Alkyl- oder Arylalkylgruppe kann dabei linear oder verzweigt sein sowie cycloaliphatische oder aromatische Gruppen enthalten, daneben auch durch eine oder mehrere Ether- oder Thioetherfunktionen substituiert sein. Geeignete Acrylsäureester in diesem Zusammenhang sind auch solche, die aus einer Alkoholkomponente synthetisiert wurden, die wiederum auf Oligoethylenglycol oder Oligopropylenglycol mit nur einer Hydroxylgruppe und maximal 30 C-Atomen basiert.

Bevorzugt kann die Alkylgruppe oder Arylalkylgruppe des Acrylsäureesters ausgewählt sein aus der Gruppe umfassend Methyl, Ethyl, n-Propyl, iso-Propyl, n-Butyl, iso-Butyl, tert-Butyl, sec-Butyl, 1-Pentyl, 1-Hexyl, 2-Hexyl, 3-Hexyl, 1-Heptyl, 3-Heptyl, 1-Octyl, 1-(2-Ethyl)-hexyl, 1-Nonyl, 1-Decyl, 1-Dodecyl, 1-Lauryl oder 1-Octadecyl. Bevorzugt sind Alkylgruppen oder Arylalkylgruppen mit 6-20 Kohlenstoffatomen. Bevorzugt sind insbesondere auch verzweigte Alkylgruppen, die im Erfindungsgemäß besonders bevorzugt sind Copolymerisate B), bei denen das Olefin mit Acrylsäure-(2-ethyl)-hexylester copolymerisiert wird. Ebenfalls geeignet sind Mischungen der beschriebenen Acrylsäureester.

Bevorzugt ist hierbei die Verwendung von mehr als 60 Gew.-Teilen, besonders bevorzugt mehr als 90 Gew.-Teilen und ganz besonders bevorzugt die Verwendung von 100 Gew.-Teilen Acrylsäure-(2-ethyl)-hexylester bezogen auf die Gesamtmenge an Acrylsäureester im Copolymerisat B).

In einer weiteren bevorzugten Ausführungsform werden die weiteren reaktiven funktionellen Gruppen ausgewählt aus der Gruppe umfassend Epoxide, Oxetan, Anhydride, Imide, Aziridine, Furane, Säuren, Amine, Oxazoline des Copolymerisates B) ausschließlich über die Acrylsäureester in das Copolymer B) eingebracht.

Der Gehalt der Acrylsäureester am Copolymerisat B) liegt zwischen 10 und 50 Gew.-Teilen, bevorzugt zwischen 25 und 45 Gew.-Teilen.

Das erfindungsgemäß einzusetzende Stoffgemisch enthält wenigstens einen Füll- und Verstärkungsstoff C) aus der Reihe Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffe auf der Basis von Kohlenstofffasern und/oder Glasfasern.

Als Füllstoff oder Verstärkungsstoff können somit auch Mischungen aus zwei oder mehr unterschiedlichen Füllstoffen und/oder Verstärkungsstoffen eingesetzt werden.

Besonders bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt.

Ganz besonders bevorzugt werden mineralische teilchenförmige Füllstoffe auf der Basis von Talk, Wollastonit, Kaolin und/oder Glasfasern eingesetzt.

Insbesondere bevorzugt werden ferner auch nadelförmige mineralische Füllstoffe eingesetzt. Unter nadelförmigen mineralischen Füllstoffen wird erfindungsgemäß ein mineralischer Füllstoffe mit stark ausgeprägtem nadelförmige Charakter verstanden. Als Beispiel seien nadelförmige Wollastonite genannt. Bevorzugt weist dieses Mineral ein Länge : Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäßen nadelförmige Mineralien liegt bevorzugt bei besonders bevorzugt von 3:1 bis 19:1, insbesondere bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, bestimmt mit einem CILAS GRANULOMETER.

Wie bereits oben beschrieben ist in einer bevorzugten Ausführungsform der Füllstoff und/oder Verstärkungsstoff Oberflächen-modifiziert, besonders bevorzugt mit einem Haftvermittler bzw. Haftvermittlersystem, ganz besonders bevorzugt mit einem Haftvermittlersystem auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß insbesondere bevorzugt einzusetzenden Glasfasern können entweder eine kreisförmige Querschnittsfläche und einen Filament-Durchmesser von 6 bis 18 µm, bevorzugt zwischen 9 und 15 µm, oder eine flache Gestalt und nicht-kreisförmige Querschnittsfläche, deren Hauptquerschnittsachse eine Breite im Bereich von 6 - 40 µm und deren Nebenquerschnittsachse eine Breite im Bereich von 3 - 20 µm besitzt, aufweisen. Die Glasfaser wird bevorzugt ausgewählt aus der Gruppe der E-Glasfasern, A-Glasfasern, C-Glasfasern, D-Glasfasern, S-Glasfasern und / oder R-Glasfasern.

Die Glasfasern können als Endlosfasern oder als geschnittene oder gemahlene Glasfasern zugesetzt werden. Die Fasern können mit einem geeigneten Schlichtesystem, enthaltend u.a. bevorzugt Haftvermittler insbesondere auf Silanbasis ausgerüstet sein.

Gebräuchliche Haftvermittler auf Silanbasis für die Vorbehandlung sind Silanverbindungen beispielsweise der allgemeinen Formel (I)

(X-(CH₂)_{q})ₖ-Si-(O-Cᵣ-Hᵣ₊₁)₄₋ₖ (I)

in der die Substituenten folgende Bedeutung haben:
- X: für NH₂-, HO- oder 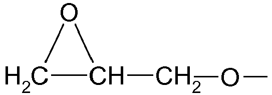 steht,
- q: für eine ganze Zahl von 2 bis 10, bevorzugt 3 bis 4 steht,
- r: für eine ganze Zahl von 1 bis 5, bevorzugt 1 bis 2 steht und
- k: für eine ganze Zahl von 1 bis 3, bevorzugt 1 steht.

Bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane der Formel (I), welche als Substituent X eine Glycidylgruppe enthalten.

Für die Ausrüstung der Füllstoffe werden bevorzugt Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt aufweisen.

Die erfindungsgemäßen thermoplastischen Formmassen enthalten wenigstens ein aliphatisches, alicyclisches oder aromatisches Carbodiimid D), bevorzugt ein Carbodiimid der Formel (II) 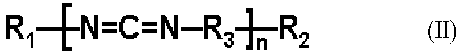 worin R₁ und R₂ jeweils unabhängig voneinander für eine funktionelle chemische Gruppe stehen, bevorzugt jeweils unabhängig voneinander für einen Isocyanatrest oder einen blockierten Isocyanatrest stehen, R₃ eine aliphatische, alicyclische oder aromatische Gruppe symbolisiert und n eine ganze Zahl von 3 bis 5000, bevorzugt 4 bis 2000, besonders bevorzugt von 5 bis 1000 bedeutet.

Bevorzugt geeignete Gruppen R₃ sind divalente Radikale von 2,6-Diisopropylbenzol, Naphthalin, 3,5-Diethyltoluol, 4,4'-Methylen-bis(2,6-diethylenphenyl), 4,4'-Methylen-bis(2-ethyl-6-methylphenyl), 4,4'-methylen-bis(2,6-diisopropylphenyl), 4,4'-methylen-bis(2-ethyl-5-methylcyclohexyl), 2,4,6-Triisopropylphenyl, n-Hexan, Cyclohexan, Dicyclohexylmethan, Methylcyclohexan und ähnliche.

Bevorzugte terminale Gruppen R₁ und R₂ sind Isocyanate, die durch eine freie NCO-Gruppe charakterisiert werden, und blockierte Isocyanate, an deren NCO-Gruppen reaktive Moleküle wie sekundäre Amine, Oxime, Lactame, Ester oder H-acide Verbindungen wie Phenole addiert wurden und deren NCO-Gruppen beispielsweise durch Erhitzen wieder freigesetzt werden können.

Die erfindungsgemäß einzusetzenden oligomeren oder polymeren Carbodiimide sind kommerziell erhältlich, zum Beispiel die Produkte Stabaxol P® von Rhein Chemie GmbH.

In einer bevorzugten Ausführungsform können diese erfindungsgemäßen thermoplastischen Formmassen zusätzlich zu den Komponenten Polyamid A), Copolymerisat B), Füll- und Verstärkungsstoffen C) und Polycarbodiimid D) noch wenigstens ein sonstiges übliches Additiv E) enthalten, wobei die Summe aller Gewichtsprozente immer 100 ergibt, indem die Gewichtsteile der Komponenten A) bis D) entsprechend reduziert werden.

Bevorzugte Additive E) im Sinne der vorliegenden Erfindung sind Stabilisatoren, Antistatika, Fliesshilfsmittel, Entformungsmittel, Brandschutzadditive, Emulgatoren, Nukleierungsmittel, Weichmacher, Gleitmittel, Farbstoffe, Pigmente, Verzweiger, Kettenverlängerer oder Additive zur Erhöhung der elektrischen Leitfähigkeiten. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Bevorzugte Stabilisatoren sind Thermostabilisatoren und UV-Stabilisatoren. Als Stabilisatoren werden bevorzugt Kupfer(1)halogenide, bevorzugt Chloride, Bromide, Jodide in Verbindung mit Halogeniden von Alkalimetallen, bevorzugt Natrium-, Kalium- und/oder Lithium-halogeniden, sterisch gehinderte Phenole, Hydrochinone, Phosphite, aromatische sekundäre Amine wie Diphenylamine, substituierte Resorcine, Salicylate, Benzotriazole oder Benzophenone, sowie verschieden substituierte Vertreter dieser Gruppen oder deren Mischungen eingesetzt.

Als Pigmente bzw. Farbstoffe werden bevorzugt Titandioxid, Ultramarinblau, Eisenoxid, Ruß, Phthalocyanine, Chinacridone, Perylene, Nigrosin und Anthrachinone eingesetzt.

Als Nukleierungsmittel werden bevorzugt Natrium- oder Calciumphenylphosphinat, Aluminiumoxid, Siliziumdioxid sowie bevorzugt Talkum eingesetzt.

Als Gleit- und Entformungsmittel werden bevorzugt Esterwachse, Pentaerythritoltetrastearat (PETS), langkettige Fettsäuren, besonders bevorzugt Stearinsäure oder Behensäure und Ester, deren Salze, insbesondere bevorzugt Ca- oder Zn-Stearat, sowie Amidderivate, bevorzugt Ethylen-bisstearylamid oder Montanwachse, bevorzugt Mischungen aus geradkettigen, gesättigten Carbonsäuren mit Kettenlängen von 28 bis 32 C-Atomen sowie niedermolekulare Polyethylen- bzw. Polypropylenwachse eingesetzt.

Als Weichmacher werden bevorzugt Phthalsäuredioctylester, Phthalsäuredibenzylester, Phthalsäurebutylbenzylester, Kohlenwasserstofföle, N-(n-Butyl)benzolsulfonamid eingesetzt.

Als Additive zur Erhöhung der elektrischen Leitfähigkeit werden bevorzugt Russe, Leitfähigkeitsrusse, Carbonfibrillen, nanoskalige Graphit- und Kohlenstofffasern, Graphit, leitfähige Polymere, Metallfasern sowie andere übliche Additive zur Erhöhung der elektrischen Leitfähigkeit zugesetzt. Als nanoskalige Fasern werden bevorzugt sogenannte "single wall Kohlenstoff-Nanotubes" oder "multi wall Kohlenstoff-Nanotubes" (z. B. der Firma Hyperion Catalysis) eingesetzt.

In einer besonders bevorzugten Ausführungsform betrifft die vorliegende Erfindung thermoplastische Formmassen sowie daraus hergestellte Bauteile für Kühlkreisläufe, bevorzugt für Kraftfahrzeug-Kühlkreisläufe enthaltend
A) 20 bis 79,8 Gewichtsteile eines oder mehrerer Polyamide oder Copolyamide,
B) 0,05 bis 10 Gewichtsteile wenigstens eines Copolymerisats aus mindestens einem Olefin und mindestens einem Acrylsäureester eines aliphatischen Alkohols, wobei der MFI des Copolymerisats größer als 10 g / 10 min ist und dieser nach ISO 1133 bei 190° C und einem Prüfgewicht von 2,16 kg gemessen bzw. bestimmt wird,
C) 10 bis 65 Gewichtsteile wenigstens eines Füll- und Verstärkungsstoffes,
D) 0,05 bis 10 Gewichtsteile wenigstens eines oligomeren oder polymeren Carbodiimids, und
E) 0,05 bis 5 Gewichtsteile wenigstens eines sonstigen Additivs, wobei als Additive nanoskalige Fasern, bevorzugt single wall Kohlenstoff-Nanotubes oder multi wall Kohlenstoff-Nanotubes eingesetzt werden und die Summe aller Gewichtsteile 100 ergibt.

In einer weiteren alternativen bevorzugten Ausführungsform können die erfindungsgemäßen thermoplastischen Formmassen zusätzlich zu den Komponenten A), B), C), D) und E) oder anstelle von E) noch gegebenenfalls F) 0,001 bis 80 Gew.-Teile, besonders bevorzugt 1 bis 10 Gew.-Teile wenigstens eines Elastomermodifikators enthalten, wobei die Summe aller Gewichtsteile stets 100 ergibt, indem die Gewichtsteile der Komponenten A) bis D) oder A) bis E) entsprechend reduziert werden. Die als Komponente F) einzusetzenden Elastomermodifikatoren werden oft auch als Schlagzähmodifikatoren, Elastomer, Modifikator oder Kautschuk bezeichnet.

Bevorzugt handelt es sich bei den Elastomermodifikatoren um Copolymerisate wobei Copolyamide ausgenommen sind, die bevorzugt aus mindestens zwei Monomeren der Reihe Ethylen, Propylen, Butadien, Isobuten, Isopren, Chloropren, Vinylacetat, Styrol oder Acrylnitril aufgebaut sind.

Derartige Polymere werden z. B. in Houben-Weyl, "Methoden der organischen Chemie", Bd. 14/1 (Georg-Thieme-Verlag, Stuttgart, 1961), Seiten 392 bis 406 und in der Monographie von C. B. Bucknall, "Toughened Plastics" (Applied Science Publishers, London, 1977) beschrieben.

Im Folgenden werden einige gemäß der vorliegenden Erfindung, bevorzugt einzusetzende Elastomermodifikatoren vorgestellt.

Bevorzugte Arten solcher als Schlagzähmodifikatoren einzusetzenden Elastomeren sind die sogenannten Ethylen-Propylen-Kautschuke (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen pro 100 C-Atome aufweisen können.

Als Dien-Monomere für EPDM-Kautschuke werden bevorzugt konjugierte Diene, insbesondere Isopren oder Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene, insbesondere Cyclopentadien, Cyclohexadien, Cyclooctadien und Dicyclopentadien sowie Alkenylnorbornene, insbesondere 5-Ethyliden-2-norbornen, 5-Butyliden-2-norbornen, 2-Methallyl-5-norbornen, 2-Isopropenyl-5-norbornen und Tricyclodiene, insbesondere 3-Methyl-tricyclo-(5.2.1.0.2.6)-3,8-decadien oder deren Mischungen eingesetzt. Besonders bevorzugt werden Hexa-1,5-dien, 5-Ethylidennorbornen oder Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

Bevorzugte EPM-bzw. EPDM-Kautschuke sind mit reaktiven Carbonsäuren oder mit deren Derivaten gepfropft. Hier seien bevorzugt Maleinsäureanhydrid genannt.

In einer bevorzugten Auführungsform enthalten die Kautschuke noch Dicarbonsäuren, bevorzugt Maleinsäure und Fumarsäure oder Derivate dieser Säuren, bevorzugt Ester und Anhydride und/oder Epoxy-Gruppen enthaltende Monomere. Diese Dicarbonsäurederivate bzw. Epoxygruppen enthaltenden Monomere werden vorzugsweise durch Zugabe von Dicarbonsäure- bzw. Epoxygruppen enthaltenden Monomeren der allgemeinen Formeln (III) oder (IV) oder (V) oder (VI) zum Monomerengemisch in den Kautschuk eingebaut,

R¹C(COOR²)=C(COOR³)R⁴ (III)

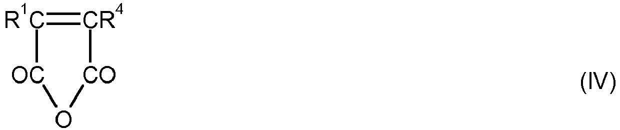

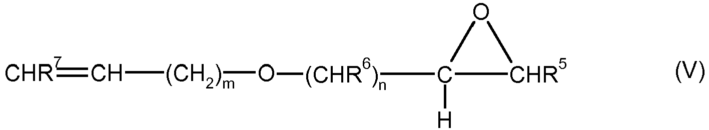

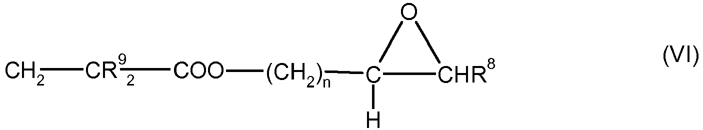

wobei
- R¹ bis R⁹: Wasserstoff oder Alkylgruppen mit 1 bis 6 C-Atomen darstellen,
- m: eine ganze Zahl von 0 bis 20, und
- n: eine ganze Zahl von 0 bis 10 ist.

Vorzugsweise bedeuten die Reste R¹ bis R⁹ Wasserstoff, wobei m für 0 oder 1 und n für 1 steht. Die entsprechenden Verbindungen sind Maleinsäure, Fumarsäure, Maleinsäureanhydrid, Allylglycidylether und Vinylglycidylether.

Erfindungsgemäß bevorzugte Verbindungen der Formeln (III), (IV) und (VI) sind Maleinsäure, Maleinsäureanhydrid und Epoxygruppen-enthaltende Ester der Methacrylsäure, bevorzugt Glycidylacrylat oder Glycidylmethacrylat und die Methacrylsäureester tertiärer Alkohole, bevorzugt Methacrylsäure-t-butylester. Letztere weisen zwar keine freien Carboxylgruppen auf, kommen aber in ihrem Verhalten den freien Säuren sehr nahe und werden deshalb im Rahmen der vorliegenden Erfindung als Monomere mit latenten Carboxylgruppen bezeichnet.

Bevorzugt bestehen die als Elastomermodifikatoren der Komponente F) einzusetzenden Copolymerisate aus 50 bis 98 Gew.-Teilen Ethylen, 0,1 bis 20 Gew.-Teilen Epoxygruppen enthaltenden Monomeren und/oder Säureanhydridgruppen enthaltenden Monomeren.

Bevorzugt werden daneben auch Vinylester oder Vinylether als Comonomere eingesetzt.

Die vorstehend beschriebenen Ethylencopolymerisate können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerisation" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Butadien und Isopren sowie deren Mischungen genannt. Diese Monomeren können mit weiteren Monomeren, bevorzugt Styrol, Acrylnitril, copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol oder p-Methylstyrol als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind bevorzugt Epoxy-, Carboxyl-, latente Carboxyl-, Amino- oder Amidgruppen sowie funktionelle Gruppen, die durch Mitverwendung von Monomeren der allgemeinen Formel (VII) 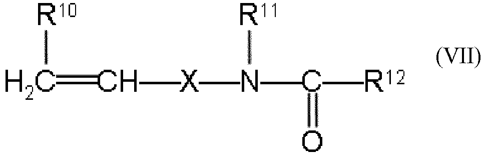 eingeführt werden können, worin die Substituenten folgende Bedeutung haben können:
- R¹⁰: Wasserstoff oder eine C₁-bis C₄-Alkylgruppe,
- R¹¹: Wasserstoff, eine C₁-bis C₈-Alkylgruppe oder eine Arylgruppe, insbesondere Phenyl,
- R¹²: Wasserstoff, eine C₁- bis C₁₀-Alkylgruppe, eine C₆-bis C₁₂-Arylgruppe oder -OR¹³
- R¹³: eine C₁-bis C₈-Alkylgruppe oder C₆-bis C₁₂-Arylgruppe, die gegebenenfalls mit O-oder N-haltigen Gruppen substituiert sein können,
- X: eine chemische Bindung, eine C₁-bis C₁₀-Alkylengruppe, eine C₆-bis C₁₂-Arylengruppe oder 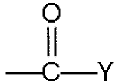
- Y: O-Z oder NH-Z und
- Z: eine C₁-bis C₁₀-Alkylengruppe oder eine C₆-bis C₁₂-Arylengruppe.

Auch die in der EP 0 208 187 A2 beschriebenen Pfropfmonomeren sind zur Einführung reaktiver Gruppen an der Oberfläche geeignet.

Ferner seien noch Acrylamid, Methacrylamid und substituierte ????????????????genannt.

In einer bevorzugten Ausführungsform sind die Teilchen der Kautschukphase auch vernetzt. Als Vernetzer wirkende Monomere sind bevorzugt Buta-1,3-dien, Divinylbenzol, Diallylphthalat und Dihydrodicyclopentadienylacrylat sowie die in der EP 0 050 265 A1 beschriebenen Verbindungen einzusetzen.

In einer bevorzugten Ausführungsform werden auch sogenannte pfropfvernetzende Monomere (graftlinking monomers) verwendet, d. h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktiven Gruppen) z. B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d. h. die aufgepfropfte Phase ist zumindest teilweise über chemische Bindungen mit der Pfropfgrundlage verknüpft.

Bevorzugte pfropfvemetzende Monomere sind Allylgruppen enthaltende Monomere, besonders bevorzugt Allylester von ethylenisch ungesättigten Carbonsäuren, insbesondere bevorzugt Diallylmaleat, Diallylfumarat, Diallylitaconat oder die entsprechenden Monoallylverbindungen dieser Dicarbonsäuren. Daneben gibt es eine Vielzahl weiterer geeigneter pfropfvemetzender Monomerer; für nähere Einzelheiten sei hier beispielsweise auf die US-A 4148846 und US-A 4 327 201 verwiesen.

Nachfolgend seien einige erfindungsgemäß bevorzugte Emulsionspolymerisate aufgeführt. Zunächst sind hier Pfropfpolymerisate mit einem Kern und mindestens einer äußeren Schale zu nennen, die folgenden Aufbau haben:

**Tabelle 1**

| **Typ** | **Monomere für den Kern** | **Monomere für die Hülle** |
|---|---|---|
| 1 | Buta-1,3-dien, Isopren, Styrol, Acrylnitril | Styrol, Acrylnitril |
| 2 | wie I, aber unter Mitverwendung von Vernetzern | wie 1 |
| 3 | wie 1 oder 2 | Buta-1, 3-dien, Isopren |
| 4 | wie 1 oder 2 | wie 1 oder 2, aber unter Mitverwendung von Monomeren mit reaktiven Gruppen wie hierin beschrieben |
| 5 | Styrol, Acrylnitril, Methylmethacrylat oder | erste Hülle aus Monomeren wie unter 1 und |
| | deren Mischungen | 2 für den Kern beschrieben |
| | | zweite Hülle wie unter 1 oder 4 für die Hülle beschrieben |

Anstelle von Pfropfpolymerisaten mit einem mehrschaligen Aufbau können auch homogene, d. h. einschalige Elastomere aus Buta-1,3-dien, Isopren oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind Pfropfpolymerisate mit einem inneren Kern aus Butadien oder auf Butadienbasis und einer äußeren Hülle aus den vorstehend genannten Copolymeren.

Die beschriebenen Elastomere können auch nach anderen üblichen Verfahren, bevorzugt durch Suspensionspolymerisation, hergestellt werden. Siliconkautschuke, wie in der DE 3 725 576 A1, der EP 0 235 690 A2, der DE 3 800 603 A1 und der EP 0 319 290 A1 beschrieben, sind ebenfalls bevorzugt.

Selbstverständlich können auch Mischungen der vorstehend aufgeführten Kautschuktypen eingesetzt werden.

Erfindungsgemäß insbesondere bevorzugt werden als Komponente F) Elastomermodifikatoren des EPM-, oder EPDM-Typs eingesetzt.

Zur Klarstellung sei angemerkt, dass vom Rahmen der Erfindung alle aufgeführten, allgemeinen oder in Vorzugsbereichen genannten Definitionen und Parameter in beliebigen Kombinationen umfasst sind.

Gegenstand der vorliegenden Anmeldung ist auch die Verwendung der erfindungsgemäßen thermoplastischen Formmassen im Spritzguss, einschließlich der Sonderverfahren GIT (Gasinjektionstechnik), WIT (Wasserinjektionstechnik) und PIT (Projektilinjektionstechnik), im Extrusionsverfahren in der Profil-Extrusion, im Blasformen, besonders bevorzugt Standard-Extrusionsblasformen, 3D-Extrusionsblasformverfahren oder Saugblasformverfahren oder zur Herstellung von Bauteilen.

Erfindungsgemäße Verfahren zur Herstellung von Bauteilen durch Extrusion oder Spritzguß arbeiten bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

### Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte. (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Bauteil gefertigt. Notwendig dazu sind immer zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung.

Die Spritzguss-Sonderverfahren GIT (Gasinjektionstechnik), WIT (Wasserinjektionstechnik) und Projektilinjektionstechnik (PIT) sind spezialisierte Spritzgussverfahren zur Herstellung hohler Werkstücke. Ein Unterschied zum Standard-Spritzguss besteht in einem speziellen Arbeitsschritt gegen Ende der Werkzeugfüllphase bzw. nach einer definierter Teilfüllung der Gussform. Im verfahrensspezifischen Arbeitsschritt wird ein Prozessmedium über einen so genannten Injektor in die schmelzeflüssig Seele des Vorspritzlings zur Hohlraumbildung injiziert. Dabei handelt es sich um Gas - in der Regel Stickstoff - im Fall der GIT und Wasser bei der WIT. Im Falle der PIT wird ein Projektil in die schmelzeflüssige Seele eingeschossen und auf diesem Weg ein Hohlraum ausgebildet.

Im Gegensatz zum Spritzguss wird bei der Extrusion ein endlos geformter Kunststoffstrang, hier ein Polyamid, im Extruder eingesetzt, wobei der Extruder eine Maschine zur Herstellung thermoplastischer Formstücke ist. Man unterscheidet

Einschneckenextruder und Doppelschneckenextruder sowie die jeweiligen Untergruppen konventioneller Einschneckenextruder, förderwirksamer Einschneckenextruder, gegenläufiger Doppelschneckenextruder und gleichläufiger Doppelschneckenextruder.

Profile im Sinne der vorliegenden Erfindung sind (Bau-)Teile, die über ihre gesamte Länge einen identischen Querschnitt aufweisen. Sie können im Profil-Extrusionsverfahren hergestellt werden. Die grundsätzlichen Verfahrensschritte des Profil-Extrusionsverfahrens sind:
1. Plastifizieren und Bereitstellen der thermoplastischen Schmelze in einem Extruder,
2. Extrusion des thermoplastischen Schmelzestrangs durch eine Kalibrierhülse, die den Querschnitt des zu extrudierenden Profils aufweist,
3. Abkühlung des extrudierten Profils in einem Kalibriertisch,
4. Weitertransport des Profils mit einem Abzug hinter dem Kalibriertisch,
5. Ablängen des zuvor endlosen Profils in einer Schneideanlage,
6. Sammeln der abgelängten Profile an einem Sammeltisch.

Eine Beschreibung der Profilextrusion von Polyamid 6 und Polyamid 66 erfolgt in Kunststoff-Handbuch 3/4, Polyamide, Carl Hanser Verlag, München 1998, Seite 374-384.

Blasformverfahren im Sinne der vorliegenden Erfindung sind bevorzugt Standard-Extrusionsblasformen, 3D-Extrusionsblasformen, Saugblasformverfahren und die sequentielle Coextrusion.

Die grundsätzlichen Verfahrensschritte des Standard-Extrusionsblasformens sind (gemäß Thielen, Hartwig, Gust, "Blasformen von Kunststoffhohlkörpern", Carl Hanser Verlag, München 2006, Seiten 15 bis 17):
1. Plastifizieren und Bereitstellen der thermoplastischen Schmelze in einem Extruder,
2. Umlenken der Schmelze in eine senkrechte Fließbewegung nach unten und das Ausformen eines schlauchförmigen Schmelze-"Vorformlings",
3. Umschließen des frei unter dem Kopf hängenden Vorformlings durch eine in der Regel aus zwei Halbschalen bestehenden Form, dem Blasformwerkzeug,
4. Einschieben eines Blasdorns oder einer (ggf. mehrer) Blasnadel(n),
5. Aufblasen des plastischen Vorformlings gegen die gekühlte Wand des Blasformwerkzeugs, wo der Kunststoff abkühlt, erhärtet und die endgültige Form des Formteils annimmt,
6. Öffnen der Form und Entformen des blasgeformten Teils,
7. Entfernen der abgequetschten "Butzen"-Abfälle" an beiden Enden des Blasformteils.

Weitere Schritte der Nachbearbeitung können folgen.

Mittels Standard-Extrusionsblasformen lassen sich auch Bauteile mit komplexer Geometrie und mehrachsigen Krümmungen herstellen. Allerdings werden dann Formteile erhalten, die einen großen Anteil von überschüssigem, abgequetschtem Material enthalten und in großen Bereichen eine Schweißnaht aufweisen.

Beim 3D-Extrusionsblasformen, auch als 3D-Blasformen bezeichnet, wird daher zur Vermeidung von Schweißnähten und zur Reduktion des Materialeinsatzes ein in seinem Durchmesser auf den Artikelquerschnitt angepasster Vorformling mit speziellen Vorrichtungen deformiert und manipuliert und dann direkt in die Blasformkavität eingebracht. Die verbleibende Quetschkante wird somit auf ein Minimum an den Artikelenden reduziert (Thielen, Hartwig, Gust, "Blasformen von Kunststoffhohlkörpern", Carl Hanser Verlag, München 2006, Seite 117-122).

Beim Saugblasformverfahren, auch als Saugblasen bezeichnet, wird der Vorformling direkt aus der Düse des Schlauchkopfes in die geschlossene Blasform gefördert und über einen Luftstrom durch die Blasform hindurch "gesaugt". Nach Austritt des unteren Endes des Vorformlings aus der Blasform wird dieser durch Schließelemente oben und unten abgequetscht, und der Aufblas- und Kühlvorgang schließen sich an (Thielen, Hartwig, Gust, "Blasformen von Kunststoffhohlkörpern", Carl Hanser Verlag, München 2006, Seite 123).

Die vorliegende Erfindung betrifft folglich auch Formteile, Formkörper oder Halbzeuge erhältlich durch Extrusion, Profil-Extrusion, Blasformen, besonders bevorzugt Standard-Extrusionsblasformen, 3D-Extrusionsblasformverfahren, Saugblasformverfahren und Sequentielle Coextrusion oder Spritzguss der erfindungsgemäßen thermoplastischen Formmassen.

Die vorliegende Erfindung betrifft deshalb auch die Verwendung der erfindungsgemäßen thermoplastischen Formmassen in Bauteilen, wobei es sich um Formteile, Formkörper oder Halbzeuge handelt, die man mittels Spritzguss, Extrusion, Profil-Extrusion oder Blasformen, insbesondere mittels Spritzguss erhält.

Die vorliegenden Erfindung betrifft aber auch die Verwendung der aus den erfindungsgemäßen thermoplastischen Formmassen erhältlichen Formteile, Formkörper oder Halbzeuge in der Kraftfahrzeug-, Elektro-, Elektronik-, Telekommunikations-, Computerindustrie, im Sport, in der Medizin, im Haushalt, in der Bau- oder in der Unterhaltungsindustrie.

Die vorliegende Erfindung betrifft aber auch die Verwendung dieser Formteile, Formkörper oder Halbzeuge als luftführende Bauteile, kühlwasserführende Bauteile, ölführende Bauteile, andere Medien führende Rohre oder Behälter, Kraftstofftanks oder Öltanks.

Die vorliegende Erfindung betrifft aber auch die Verwendung jener kühlwasserführenden Bauteile im Kraftfahrzeug als Kühlerwasserverteiler, Kühlerwasserkästen, Kühlerausgleichsbehälter, Thermostatgehäuse, Kühlwasserrohre, Wärmetauscher oder Kühlsystem-Verbindungsstutzen.

### Beispiele

Zum Nachweis der erfmdungemäß beschriebenen Verbesserungen wurden zunächst durch Compoundierung entsprechende Kunststoff-Formmassen angefertigt. Die einzelnen Komponenten wurden in einem Zweiwellenextruder (ZSK 26 Mega Compounder der Fa. Coperion Werner & Pfleiderer, Stuttgart, Deutschland) bei Temperaturen zwischen 280 und 320°C gemischt, als Strang in ein Wasserbad ausgetragen, bis zur Granulierfähigkeit abgekühlt und granuliert.

Von den Formmassen wurden auf einer Spritzgussmaschine Prüfkörper für die mechanischen Prüfungen hergestellt. An den erhaltenen Prüfkörpern wurden folgende Prüfungen durchgeführt: Biegeversuch nach ISO 178, Schlagversuch nach Izod ISO 180 1U.

Zur Beurteilung der Hydrolysebeständigkeit wurde die Veränderung der IZOD-Schlagzähigkeit nach ISO 180 1U, der Biegefestigkeit und der Randfaserdehnung bei Maximalkraft jeweils bei Raumtemperatur bestimmt.

Dazu wurden die Prüfkörper in einem Autoklaven bei 130°C in einem 1:1 (Vol.) Gemisch Ethylenglykol/Wasser für 42 Tage gelagert. Die Probekörper wurden nach der Lagerung mit demineralisiertem Wasser abgespült, abgetrocknet und anschließend im Biegeversuch nach ISO 178 bzw. im Schlagversuch nach Izod ISO 180 1U ausgeprüft. Zur Bestimmung der Ausgangswerte wurden der Biegeversuch nach ISO 178 und der Schlagversuch nach Izod ISO 180 1U an spritzfrischen Probekörpern im ungelagerten Zustand durchgeführt.

Der Vergleich 1 enthielt weder Copolymerisate B) noch polymere Carbodiimide D). Vergleich 2 enthielt Copolymerisate B) in Anlehnung an WO2005/121249 A1. Vergleich 3 enthielt polymere Carbodiimide in Anlehnung an EP 0 567 884 und DE 202010002421U1.

Prüfkörper des erfindungsgemäßen Beispiels 1 zeigen eine deutliche Verbesserung der IZOD-Schlagzähigkeit nach ISO 180 1U, der Biegefestigkeit und der Randfaserdehnung nach Autoklaven-Lagerung bei 130°C in einem 1:1 (Vol.) Gemisch Ethylenglykol/Wasser für 42 Tage im Vergleich zu den Vergleichen 1, 2, 3.

**Tabelle 2: Ausführungsbeispiele**

| | | | | | |
|---|---|---|---|---|---|
| In der folgenden Tabelle sind die Mengen der Einsatzstoffe in Gew.-Teilen und die erfindungsgemäßen Effekte angegeben. | | | | | |

| | | **Vergleich 1** | **Vergleich 2** | **Vergleich 3** | **Beispiel 1** |
|---|---|---|---|---|---|
| Polyamid 66 ¹⁾ | [%] | 67,6 | 66,1 | 61,6 | 64,1 |
| Glasfaser ²⁾ | [%] | 30 | 30 | 30 | 30 |
| Ethylen-AcrylatCopolymerisat | [%] | | | 6 | 2 |
| Polycarbodiimid ⁴⁾ | [%] | | 1,5 | | 1,5 |
| Additive ⁵⁾ | [%] | 2,4 | 2,4 | 2,4 | 2,4 |
| Massetemperatur Spritzguß | [°C] | 290 | 290 | 290 | 290 |
| Werkzeugtemperatur Spritzguß | [°C] | 80 | 80 | 80 | 80 |
| Schlagzähigkeit Izod ISO 180 1U, spritzfrisch | [kJ/m²] | 76 | 82 | 74 | 80 |
| Schlagzähigkeit Izod ISO 180 1U, nach 42 d Lagerung | [kJ/m²] | 30 | 36 | 25 | 42 |
| Biegefestigkeit, spritzfrisch | [MPa] | 280 | 283 | 249 | 267 |
| Biegefestigkeit, nach 42 d Lagerung | [MPa] | 45 | 60 | 48 | 67 |
| Randfaserdehnung, spritzfrisch | [%] | 4,3 | 4,5 | 4,2 | 4,6 |
| Randfaserdehnung, nach 42 d Lagerung | [%] | 1,6 | 2,2 | 1,8 | 2,7 |

| | | | | | |
|---|---|---|---|---|---|
| 1) Lineares Polyamid 66 mit einer relativen Lösungsviskosität bei 25°C in einer 1 gew.-%igen Lösung in meta-Kresol von 3,0 der Radici, Italien 2) Glasfaser CS 7997 EC10 der Lanxess Deutschland GmbH 3) Copolymerisat aus Ethen und Acrylsäure-2-ethylhexylester mit einem Ethen-Anteil von 63 Gewichts-% und einem MFI von 550 4) Stabaxol® P100 der Rhein Chemie GmbH 5) als sonstige Additive sind enthalten: Thermostabilisator Kupferiodid (300 bis 400 ppm) im Gemisch mit Kaliumbromid (800 bis 1000 ppm), ca. 0,2 % Entformungshilfsmittel (Amidwachs oder Montanesterwachs), 0,2 bis 0,8 % Schwarzmittel (Ruß, Nigrosin) und ca. 200 ppm Mikrotalkum als Nukleierungsmittel. Die Additive können in Form Polyamidhaltiger Konzentrate, sogenannter Masterbatche, eingesetzt werden. | | | | | |

## Patentansprüche

1. Thermoplastische Formmassen enthaltend
A) 25 bis 79,85 Gewichtsteile eines oder mehrerer Polyamide oder Copolyamide,
B) 0,05 bis 10 Gewichtsteile wenigstens eines Copolymerisats aus mindestens einem Olefin und mindestens einem Acrylsäureester eines aliphatischen Alkohols, wobei der MFI des Copolymerisats größer 10g / 10 min ist und dieser nach ISO 1133 bei 190°C und einem Prüfgewicht von 2,16 kg gemessen bzw. bestimmt wird, mit mehr als 60 Gew.-Teilen Acrylsäure-(2-ethyl)-hexylester bezogen auf die Gesamtmenge an Acrylsäureester im Copolymerisat B),
C) 10 bis 65 Gewichtsteile wenigstens eines Füll- und Verstärkungsstoffes, und
D) 0,05 bis 10 Gewichtsteile wenigstens eines oligomeren oder polymeren Carbodiimids,
wobei die Summe der Gewichtsteile 100 ergibt, und Füllstoffe und/oder Verstärkungsstoffe der Reihe Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffe auf der Basis von Kohlenstofffasern und/oder Glasfasern eingesetzt werden.

2. Thermoplastische Formmassen gemäß Anspruch 1, **dadurch gekennzeichnet, dass** als oligomeres oder polymeres Carbodiimid aliphatischen, alicyclische oder aromatische Carbodiimide eingesetzt werden, die durch die Formel (II) 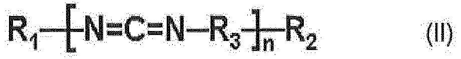 dargestellt werden, worin
R₁ und R₂ jeweils unabhängig voneinander für eine funktionelle chemische Gruppe stehen
R₃ eine aliphatische, alicyclische oder aromatische Gruppe symbolisiert und
n eine ganze Zahl von 3 bis 5000 bedeutet.

3. Thermoplastische Formmassen gemäß Anspruch 2, **dadurch gekennzeichnet, dass** für R₃ divalente Radikale von 2,6-Diisopropylbenzol, Naphthalin, 3,5-Diethyltoluol, 4.4'-Methylen-bis(2,6-diethylenphenyl), 4,4'-Methylen-bis(2-ethyl-6-methylphenyl), 4,4'-methylen-bis(2-ethyl-5-methylcyclohexyl), 2,4,6-Triisnpropylphenyl, n-Hexan, Cyclohexan, Dicyclohexylmethan, Methylcyclohexan eingesetzt werden.

4. Thermoplastische Formmassen gemäß der Ansprüche 2 oder 3, **dadurch gekennzeichnet, dass** terminale Gruppen R1 und R2 Isocyanate sind, die durch eine freie NCO-Gruppe charakterisiert werden, und blockierte isocyanat, an deren NCO-Gruppen reaktive Moleküle wie sekundäre Amine, Oxime, Lactame, Ester oder H-acide Verbindungen wie Phenole addiert wurden und deren NCO-Gruppen durch Erhitzen wieder freigesetzt werden.

5. Thermoplastische Formmassen gemäß einem der Ansprüche 1 bis 4, **dadurch gekennzeichnet, dass** bezogen auf die Gesamtmenge an Acrylsäureester im Copolymerisat B) 100 Gew.-Teile Acrylsäure-(2-ethyl)-hexylester eingesetzt werden.

6. Verwendung einer Stoffkombination aus wenigstens einem Copolymerisat aus mindestens einem Olefin und mindestens einem Acrylsäureester eines aliphatischen Alkohols und wenigstens einem oligomeren oder polymeren Carbodiimid worin das Copolymerisat einen MFI größer 10 g / 10 min ist, bevorzugt größer 150 g / 10 min und besonders bevorzugt größer 300 g / 10 min aufweist, wobei der MFI nach ISO 1133 bei 190°C und einem Prüfgewicht von 2,16 kg gemessen bzw. bestimmt wird, mit mehr als 60 Gew.-Teilen Acrylsäure-(2-ethylhexylester) bezogen auf die Gesamtmenge an Acrylsäureester im Copolymerisat B) und als oligomeres oder polymeres Carbodiimid aliphatische, alicyclische oder aromatische Carbodiimide eingesetzt werden, die durch die Formel (II) 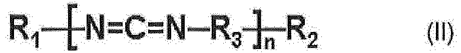 dargestellt werden, worin
R₁ und R₂ jeweils unabhängig voneinander für eine funktionelle chemische Gruppe stehen
R₃ eine aliphatische, alicyclische oder aromatische Gruppe symbolisiert und
n eine ganze Zahl von 3 bis 5000 bedeutet,
in Polyamid-basierten thermoplastischen Formmassen, bevorzugt zur Verbesserung der Hydrolysebeständigkeit Polyamid-basierter Erzeugnisse.

7. Verwendung gemäß Anspruch 6, **dadurch gekennzeichnet, dass** es sich um thermoplastische Formmassen enthaltend
A) 25 bis 79,85 Gewichtsteile eines oder mehrerer Polyamide oder Copolyamide,
B) 0,05 bis 10 Gewichtsteile wenigstens eines Copolymerisats aus mindestens einem Olefin und mindestens einem Acrylsäureester eines aliphatischen Alkohols, wobei der MFI des Copolymerisats größer 10g / 10 min ist und dieser nach ISO 1133 bei 190°C und einem Prüfgewicht von 2,16 kg gemessen bzw. bestimmt wird, mit mehr als 60 Gew.-Teilen Acrylsäure-(2-ethyl)-hexylester bezogen auf die Gesamtmenge an Acrylsäureester im Copolymerisat B),
C) 10 bis 65 Gewichtsteile wenigstens eines Füll- und Verstärkungsstoffes, und
D) 0,05 bis 10 Gewichtsteile wenigstens eines oligomeren oder polymeren Carbodiimids
wobei die Summe der Gewichtsteile 100 ergibt, handelt.

8. Verwendung gemäß der Ansprüche 6 oder 7, **dadurch gekennzeichnet dass** es sich bei den Erzeugnissen um Formteile, Formkörper oder Halbzeuge handelt, die man mittels Spritzguß, Extrusion, Profil-Extrusion oder Blasformen erhält.

9. Verwendung gemäß Anspruch 8, **dadurch gekennzeichnet, dass** die Formteile, Formkörper oder Halbzeuge in der Kraftfahrzeug-, Elektro-, Elektronik-, Telekommunikations-, Computerindustrie, im Sport, in der Medizin, im Haushalt, in der Bau- oder in der Unterhaltungsindustrie eingesetzt werden.

10. Verwendung gemäß Anspruch 9, **dadurch gekennzeichnet, dass** es sich bei den Formteilen, Formkörpern oder Halbzeugen um luftführende Bauteile, kühlwasserführende Bauteile, ölführende Bauteile, andere Medien führende Rohre und Behälter, Kraftstofftanks oder Öltanks handelt.

11. Verwendung gemäß Anspruch 10, **dadurch gekennzeichnet dass** es sich bei den kühlwasserführenden Bauteilen im Kraftfahrzeug-Kühlkreislauf, um Kühlerwasserverteiler, Kühlerwasserkästen, Kühlerausgleichsbehälter, Thermostatgehäuse, Kühlwasserrohre, Wärmetauscher oder Kühlsystem-Verbindungsstutzen handelt.

12. Verfahren zur Verhinderung der Hydrolyse und/oder Glykolyse von Bauteilen im Kraftfahrzeug-Kühlkreislauf, **dadurch gekennzeichnet, dass** die zur Herstellung dieser Komponenten einzusetzenden Polyamide in Form einer thermoplastischen Formmasse enthaltend
A) 25 bis 79,85 Gewichtsteile eines oder mehrerer Polyamide oder Copolyamide,
B) 0,05 bis 10 Gewichtsteile wenigstens eines Copolymerisats aus mindestens einem Olefin und mindestens einem Acrylsäureester eines aliphatischen Alkohols, wobei der MFI des Copolymerisats größer 10g / 10 min ist und dieser nach ISO 1133 bei 190°C und einem Prüfgewicht von 2,16 kg gemessen bzw. bestimmt wird, mit mehr als 60 Gew.-Teilen Acrylsäure-(2-ethyl)-hexylester bezogen auf die Gesamtmenge an Acrylsäureester im Copolymerisat B),
C) 10 bis 65 Gewichtsteile wenigstens eines Füll- und Verstärkungsstoffes, und
D) 0,05 bis 10 Gewichtsteile wenigstens eines oligomeren oder polymeren Carbodiimids,
wobei die Summe der Gewichtsteile 100 ergibt, eingesetzt werden.

13. Verfahren gemäß Anspruch 12, **dadurch gekennzeichnet, dass** zur Herstellung der Bauteile Verfahren des Spitzgusses, der Extrusion oder des Saugblasformens angewendet werden.

14. Verfahren gemäß Anspruch 13, **dadurch gekennzeichnet, dass** die Verfahren des Spritzgusses oder der Extrusion bei Schmelzetemperaturen im Bereich von 230 bis 330°C arbeiten.

## Claims

1. Thermoplastic moulding compositions comprising
A) from 25 to 79.85 parts by weight of one or more polyamides or copolyamides,
B) from 0.05 to 10 parts by weight of at least one copolymer of at least one olefin and of at least one acrylate of an aliphatic alcohol, where the MFI of the copolymer is greater than 10 g / 10 min and this is measured or determined in accordance with ISO 1133 at 190°C with a test weight of 2.16 kg, with more than 60 parts by weight of 2-ethylhexyl acrylate based on the total amount of acrylate in the copolymer B),
C) from 10 to 65 parts by weight of at least one filler and reinforcing material, and
D) from 0.05 to 10 parts by weight of at least one oligomeric or polymeric carbodiimide,
where the total of the parts by weight is 100, and fillers and/or reinforcing materials from the group of talc, mica, silicate, quartz, titanium dioxide, wollastonite, kaolin, amorphous silicas, magnesium carbonate, chalk, feldspar, barium sulphate, glass beads and/or fibrous fillers and/or reinforcing materials based on carbon fibres and/or glass fibres are used.

2. Thermoplastic moulding compositions according to Claim 1, **characterized in that** oligomeric or polymeric carbodiimide used comprises aliphatic, alicyclic or aromatic carbodiimides represented by the formula (II) 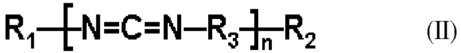 in which
R₁ and R₂ respectively mutually independently are a functional chemical group
R₃ symbolizes an aliphatic, alicyclic or aromatic group and
n means an integer from 3 to 5000.

3. Thermoplastic moulding compositions according to Claim 2, **characterized in that** groups used for R₃ are divalent radicals of 2,6-diisopropylbenzene, naphthalene, 3,5-diethyltoluene, 4,4'-methylenebis(2,6-diethylenephenyl), 4,4'-methylenebis(2-ethyl-6-methylphenyl), 4,4'-methylenebis(2-ethyl-5-methylcyclohexyl), 2,4,6-triisopropylphenyl, n-hexane, cyclohexane, dicyclohexylmethane and methylcyclohexane.

4. Thermoplastic moulding compositions according to Claim 2 or 3, **characterized in that** terminal groups R1 and R2 are isocyanates, which are **characterized by** a free NCO group, and capped isocyanates, the NCO groups of which have been subject to an addition reaction with reactive molecules such as secondary amines, oximes, lactams, esters or H-acidic compounds such as phenols, and the NCO groups of which are liberated again by heating.

5. Thermoplastic moulding compositions according to any of Claims 1 to 4, **characterized in that** 100 parts by weight of 2-ethylhexyl acrylate are used based on the total amount of acrylate in the copolymer B).

6. Use of a substance combination made of at least one copolymer of at least one olefin and of at least one acrylate of an aliphatic alcohol and of at least one oligomeric or polymeric carbodiimide, in which the MFI of the copolymer is greater than 10 g / 10 min, preferably greater than 150 g / 10 min and particularly preferably greater than 300 g / 10 min, where the MFI is measured or determined in accordance with ISO 1133 at 190°C with a test weight of 2.16 kg, with more than 60 parts by weight of 2-ethylhexyl acrylate based on the total amount of acrylate in the copolymer B), and oligomeric or polymeric carbodiimide used comprises aliphatic, alicyclic or aromatic carbodiimides represented by the formula (II) 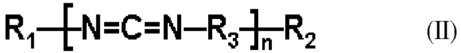 in which
R₁ and R₂ respectively mutually independently are a functional chemical group
R₃ symbolizes an aliphatic, alicyclic or aromatic group and
n means an integer from 3 to 5000,
in polyamide-based thermoplastic moulding compositions, preferably for improving the hydrolysis resistance of polyamide-based products.

7. Use according to Claim 6, **characterized in that** it involves thermoplastic moulding compositions comprising
A) from 25 to 79.85 parts by weight of one or more polyamides or copolyamides,
B) from 0.05 to 10 parts by weight of at least one copolymer of at least one olefin and of at least one acrylate of an aliphatic alcohol, where the MFI of the copolymer is greater than 10 g / 10 min and this is measured or determined in accordance with ISO 1133 at 190°C with a test weight of 2.16 kg, with more than 60 parts by weight of 2-ethylhexyl acrylate based on the total amount of acrylate in the copolymer B),
C) from 10 to 65 parts by weight of at least one filler and reinforcing material, and
D) from 0.05 to 10 parts by weight of at least one oligomeric or polymeric carbodiimide,
where the total of the parts by weight is 100.

8. Use according to Claim 6 or 7, **characterized in that** the products involve moulded parts, mouldings or semifinished products which are obtained by means of injection moulding, profile extrusion or other extrusion processes, or blow moulding.

9. Use according to Claim 8, **characterized in that** the moulded parts, mouldings or semifinished products are used in the motor vehicle industry, electrical industry, electronics industry, telecommunications industry, or computer industry, in sports, in medicine, in households, in the construction industry or in the entertainment industry.

10. Use according to Claim 9, **characterized in that** the moulded parts, mouldings or semifinished products involve air-conducting components, cooling-water-conducting components, oil-conducting components, containers and pipes conducting other fluids, fuel tanks or oil tanks.

11. Use according to Claim 10, **characterized in that** the cooling-water-conducting components in the cooling circuit of a motor vehicle involve cooling-water-distribution systems, cooling-water tanks, coolant-expansion containers, thermostat housings, cooling-water pipes, heat exchangers or cooling-system connectors.

12. Method for inhibiting hydrolysis and/or glycolysis of components in the coolant circuit of a motor vehicle, **characterized in that** the polyamides to be used for producing the said components take the form of a thermoplastic moulding composition comprising
A) from 25 to 79.85 parts by weight of one or more polyamides or copolyamides,
B) from 0.05 to 10 parts by weight of at least one copolymer of at least one olefin and of at least one acrylate of an aliphatic alcohol, where the MFI of the copolymer is greater than 10 g / 10 min and this is measured or determined in accordance with ISO 1133 at 190°C with a test weight of 2.16 kg, with more than 60 parts by weight of 2-ethylhexyl acrylate based on the total amount of acrylate in the copolymer B),
C) from 10 to 65 parts by weight of at least one filler and reinforcing material, and
D) from 0.05 to 10 parts by weight of at least one oligomeric or polymeric carbodiimide,
where the total of the parts by weight is 100.

13. Method according to Claim 12, **characterized in that** the production of the components uses processes of injection moulding, of extrusion or of suction blow moulding.

14. Method according to Claim 13, **characterized in that** the processes of injection moulding or of extrusion operate at melt temperatures in the range from 230 to 330°C.

## Revendications

1. Masses de formage thermoplastiques, contenant :
A) 25 à 79,85 parties en poids d'un ou de plusieurs polyamides ou copolyamides,
B) 0,05 à 10 parties en poids d'au moins un copolymère d'au moins une oléfine et d'au moins un ester de l'acide acrylique d'un alcool aliphatique, le MFI du copolymère étant supérieur à 10 g/10 min et celui-ci étant mesuré ou déterminé selon ISO 1133 à 190 °C et à un poids d'essai de 2,16 kg, contenant plus de 60 parties en poids d'ester (2-éthyl)-hexylique de l'acide acrylique par rapport à la quantité totale d'esters de l'acide acrylique dans le copolymère B), selon ISO 1133 à 190 °C et à un poids d'essai de 2,16 kg,
C) 10 à 65 parties en poids d'au moins une charge et matière renforçante, et
D) 0,05 à 10 parties en poids d'au moins un carbodiimide oligomère ou polymère,
la somme des parties en poids étant de 100, et des charges et/ou des matières renforçantes de la série constituée par le talc, le mica, le silicate, le quartz, le dioxyde de titane, la wollastonite, le kaolin, les silices amorphes, le carbonate de magnésium, la craie, le feldspath, le sulfate de baryum, les billes de verre et/ou des charges et/ou des matières renforçantes fibreuses à base de fibres de carbone et/ou de fibres de verre étant utilisées.

2. Masses de formage thermoplastiques selon la revendication 1, **caractérisées en ce que** des carbodiimides aliphatiques, alicycliques ou aromatiques qui sont représentés par la formule (II) 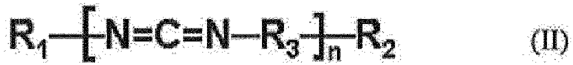 dans laquelle
R₁ et R₂ représentent chacun indépendamment l'un de l'autre un groupe chimique fonctionnel,
R₃ symbolise un groupe aliphatique, alicyclique ou aromatique, et
n signifie un nombre entier de 3 à 5 000,
sont utilisés en tant que carbodiimide oligomère ou polymère.

3. Masses de formage thermoplastiques selon la revendication 2, **caractérisées en ce que** des radicaux bivalents de 2,6-diisopropylbenzène, naphtaline, 3,5-diéthyltoluène, 4,4'-méthylène-bis(2,6-diéthylène-phényle), 4,4'-méthylène-bis(2-éthyl-6-méthylphényle), 4,4'-méthylène-bis(2-éthyl-5-methylcyclohexyle), 2,4,6-triisopropylphényle, n-hexane, cyclohexane, dicyclohexylméthane, méthylcyclohexane sont utilisés pour R3.

4. Masses de formage thermoplastiques selon les revendications 2 ou 3, **caractérisées en ce que** les groupes terminaux R1 et R2 sont des isocyanates, qui sont **caractérisés par** un groupe NCO libre, et des isocyanates bloqués, sur les groupes NCO desquels des molécules réactives telles que des amines secondaires, des oximes, des lactames, des esters ou des composés à H-acide tels que des phénols ont été additionnées, et dont les groupes NCO sont libérés par chauffage.

5. Masses de formage thermoplastiques selon l'une quelconque des revendications 1 à 4, **caractérisées en ce que** 100 parties en poids d'ester (2-éthyl)-hexylique de l'acide acrylique sont utilisées par rapport à la quantité totale d'esters de l'acide acrylique dans le copolymère B).

6. Utilisation d'une combination de substances constituée d'au moins un copolymère d'au moins une oléfine et d'au moins un ester de l'acide acrylique d'un alcool aliphatique et d'au moins un carbodiimide oligomère ou polymère, le copolymère présentant un MFI supérieur à 10 g/10 min, de préférence supérieur à 150 g/10 min, et de manière particulièrement préférée supérieur à 300 g/10 min, le MFI étant mesuré ou déterminé selon ISO 1133 à 190 °C et à un poids d'essai de 2,16 kg, contenant plus de 60 parties en poids d'ester (2-éthyl)-hexylique de l'acide acrylique par rapport à la quantité totale d'esters de l'acide acrylique dans le copolymère B), et des carbodiimides aliphatiques, alicycliques ou aromatiques représentés par la formule (II) 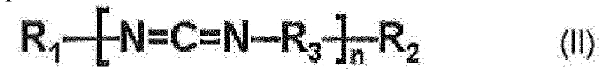 dans laquelle
R1 et R2 représentent chacun indépendamment l'un de l'autre un groupe chimique fonctionnel,
R3 symbolise un groupe aliphatique, alicyclique ou aromatique et
n signifie un nombre entier de 3 à 5 000,
étant utilisés en tant que carbodiimide oligomère ou polymère,
dans des masses de formage thermoplastiques à base de polyamide, de préférence pour l'amélioration de la résistance à l'hydrolyse d'articles à base de polyamide.

7. Utilisation selon la revendication 6, **caractérisée en ce qu'**il s'agit de masses de formage thermoplastiques contenant :
A) 25 à 79,85 parties en poids d'un ou de plusieurs polyamides ou copolyamides,
B) 0,05 à 10 parties en poids d'au moins un copolymère d'au moins une oléfine et d'au moins un ester de l'acide acrylique d'un alcool aliphatique, le MFI du copolymère étant supérieur à 10 g/10 min et celui-ci étant mesuré ou déterminé selon ISO 1133 à 190 °C et à un poids d'essai de 2,16 kg, contenant plus de 60 parties en poids d'ester (2-éthyl)-hexylique de l'acide acrylique par rapport à la quantité totale d'esters de l'acide acrylique dans le copolymère B),
C) 10 à 65 parties en poids d'au moins une charge et matière renforçante, et
D) 0,05 à 10 parties en poids d'au moins un carbodiimide oligomère ou polymère,
la somme des parties en poids étant de 100.

8. Utilisation selon la revendication 6 ou 7, **caractérisée en ce que** les produits sont des pièces moulées, des corps moulés ou des produits semi-finis, qui sont obtenus par moulage par injection, extrusion, extrusion de profilés ou moulage par soufflage.

9. Utilisation selon la revendication 8, **caractérisée en ce que** les pièces moulées, les corps moulés ou les produits semi-finis sont utilisés dans l'industrie automobile, électrique, électronique, des télécommunications, informatique, dans le sport, en médecine, dans le domaine ménager, dans l'industrie du bâtiment ou des divertissements.

10. Utilisation selon la revendication 9, **caractérisée en ce que** les pièces moulées, les corps moulés ou les produits semi-finis sont des composants conducteurs d'air, des composants conducteurs d'eau de refroidissement, des composants conducteurs d'huile, des tubes et contenants conducteurs d'autres milieux, des réservoirs à carburant ou des réservoirs à huile.

11. Utilisation selon la revendication 10, **caractérisée en ce que** les composants conducteurs d'eau de refroidissement dans le circuit de refroidissement d'automobiles sont des distributeurs d'eau de refroidisseur, des caisses d'eau de refroidisseur, des contenants de compensation de refroidisseur, des boîtiers de thermostats, des tubes d'eau de refroidissement, des échangeurs de chaleur ou des embouts de connexion de systèmes de refroidissement.

12. Procédé d'inhibition de l'hydrolyse et/ou de la glycolyse de composants dans le circuit de refroidissement de véhicules à moteur, **caractérisé en ce que** les polyamides utilisés pour la fabrication de ces composants sont utilisés sous la forme d'une masse de formage thermoplastique contenant
A) 25 à 79,85 parties en poids d'un ou de plusieurs polyamides ou copolyamides,
B) 0,05 à 10 parties en poids d'au moins un copolymère d'au moins une oléfine et d'au moins un ester de l'acide acrylique d'un alcool aliphatique, le MFI du copolymère étant supérieur à 10 g/10 min et celui-ci étant mesuré ou déterminé selon ISO 1133 à 190 °C et à un poids d'essai de 2,16 kg, contenant plus de 60 parties en poids d'ester (2-éthyl)-hexylique de l'acide acrylique par rapport à la quantité totale d'esters de l'acide acrylique dans le copolymère B),
C) 10 à 65 parties en poids d'au moins une charge et matière renforçante, et
D) 0,05 à 10 parties en poids d'au moins un carbodiimide oligomère ou polymère,
la somme des parties en poids étant de 100.

13. Procédé selon la revendication 12, **caractérisé en ce que** des procédés de moulage par injection, d'extrusion ou de moulage par aspiration-soufflage sont utilisés pour la fabrication des composants.

14. Procédé selon la revendication 13, **caractérisé en ce que** les procédés de moulage par injection ou d'extrusion sont réalisés à des températures de la masse fondue dans la plage allant de 230 à 330 °C.
